**Europäisches Patentamt**

**European Patent Office**

**Office européen des brevets**

(11) Publication number : **0 368 553 B1**

(12) # EUROPEAN PATENT SPECIFICATION

(45) Date of publication of patent specification :
**19.05.93 Bulletin 93/20**

(51) Int. Cl.⁵ : **B60C 11/04**

(21) Application number : **89311323.3**

(22) Date of filing : **01.11.89**

(54) Motorcycle tyre.

(30) Priority : **09.11.88 JP 283288/88**

(43) Date of publication of application :
**16.05.90 Bulletin 90/20**

(45) Publication of the grant of the patent :
**19.05.93 Bulletin 93/20**

(84) Designated Contracting States :
**DE FR IT**

(56) References cited :
**DE-A- 3 707 953**
**DE-C- 838 565**
**FR-A- 2 083 389**
**GUMMIBEREIFUNG. vol. 59, no. 1, January
1983, BIELEFELD DE pages 86 - 88;
"Zweirad-Reifen von Michelin"**

(73) Proprietor : **SUMITOMO RUBBER INDUSTRIES
LIMITED**
**1-1 Tsutsuicho 1-chome Chuo-ku
Kobe-shi Hyogo-ken (JP)**

(72) Inventor : **Miwa, Nobuo**
**3-3-5-303 Nishimaruyamacho Nagata-ku
Kobe-shi Hyogo-ken (JP)**

(74) Representative : **Stewart, Charles Geoffrey et
al**
**SP TYRES UK LIMITED Tyre Technical
Division**
**Fort Dunlop Birmingham B24 9QT (GB)**

## Description

The present invention relates to a pneumatic tyre for motorcycles in which both the wet grip performance and the dry grip performance are improved.

It is well known to use a circumferentially extending main groove disposed in the tread centre and inclined sub grooves disposed on both sides thereof to provide straight running stability and water drainage for motorcycle tyres.

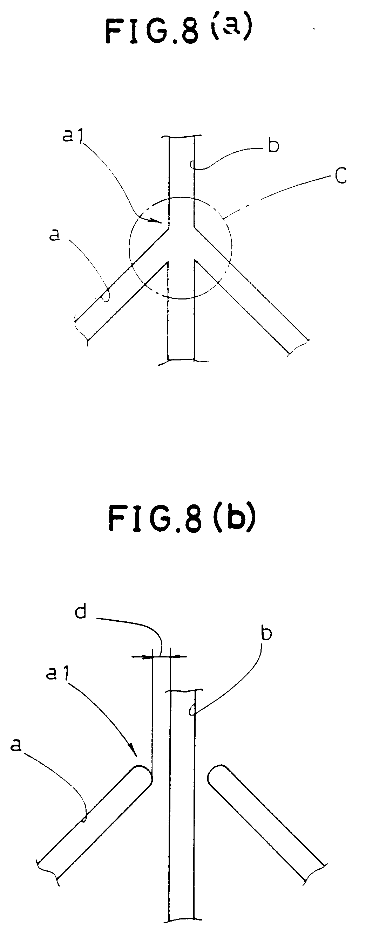

However, as shown in Figure 8a, when the inner ends a1 of the sub grooves a are connected with the main groove b to improve the drainage, the wet grip performance is improved, but the rigidity of the joint part C, that is the rigidity of the resultant angle portions between the connected grooves, is decreased, which causes a problem in that the dry grip performance is deteriorated.

On the other hand, in order to prevent a reduction in rigidity, if the inner ends a1 of the sub grooves are terminated by a vertical wall as shown in Figure 8(b), it is necessary to set the distance d therebetween to be more than 6mm and more preferably more than 10mm to avoid rigidity reduction. As a result, the wet grip performance is undesirably deteriorated.

It is therefore an object of the present invention to provide a motorcycle tyre, in which the wet grip performance and the dry grip performance, which are generally in an antinomic relation, are improved.

A tyre showing the features of the preamble of claim 1 is known, e.g. from DE-A- 3 707 953.

According to the present invention, a motorcycle tyre has a main groove extending continuously in the circumferential direction of the tyre and sub grooves each having a terminal end located near the main groove wherein the distance between the terminal end of each sub groove and the main groove is not more than 3mm at the tread surface, each terminal end has a length not less than 5mm at the tread surface, each of the sub grooves is provided at the terminal end with a protrusion the height of which from the sub groove bottom increases towards the upper end of the terminal end to provide an inclined wall on the protrusion, and the inclination angle of the inclined wall of each protrusion is in a range of 40 to 80 degrees with respect to the direction normal to the tread surface.

An embodiment of the present invention will now be described, by way of example only, with refrerence to the drawings, in which:

Figure 1 is a sectional view of a tyre according to the present invention;

Figure 2 is a plan view showing the tread pattern thereof;

Figure 3 is an enlarged plan view showing the sub groove ends;

Figure 4 is a sectional view taken along a line I-I in Figure 3;

Figure 5 is a sectional view of the sub groove;

Figure 6 is a plan view showing a modification of the tread pattern;

Figures 7(a) and (b) are sectional views each showing a modification of the protrusion; and

Figures 8(a) and (b) are plan views showing prior art details.

In the Figures, a tyre 1 has a tread portion 2, a pair of bead portions 4, and a pair of sidewall portions 3 extending radially inwardly one from each tread edge to the respective bead portion 4. The tyre has a pair of bead cores 5 one disposed in each of the bead portions 4, a toroidal carcass 6 extending between the bead portions and turned up at edge portions around the bead cores 5, and a belt 7 disposed radially outside the carcass 6.

The tread portion 2 extends from the equatorial plane of the tyre towards each side thereof so that the tread width exceeds the maximum width of the tyre in the sidewall regions, and the tread profile is substantially parallel to the contour of the carcass 6, so that camber thrust is maintained when a motorcycle is cornering on the tyre.

The carcass 6 in this embodiment comprises two plies of cords laid at an angle of 70 to 90 degrees with respect to the equator of the tyre. Preferably, the end 6a of the axially outer turned up portion of the carcass 6 is extended radially outwardly of the end 6b of the axially inner turned up portion to cover fully the end 6b, which mitigates stress concentration therearound.

As the tyre has a radial ply structure as explained above, in order to reinforce the relatively weak sidewalls of the radial structure, that is, to increase the transverse stiffness of the tyre the heights Hb and Ha of the inner and outer ends 6b and 6a from the bead base are set respectively in the ranges of 15 to 30% and 20 to 40% of the sectional height H of the tyre and further a bead apex 9 is disposed radially outside the bead cores 5 between the carcass main portion and each carcass turned up portion.

Each bead apex 9 is made of rubber having a relatively high hardness extending taperingly radially outwards from the bead core 5 into the sidewall portion 3.

For the carcass ply cords, an organic fibre cord, such as rayon, polyester, nylon or the like, whose initial modulus of elasticity is less than 850 kgf/.mm$^2$ is used.

The belt 7 in this embodiment is composed of two crossed cord plies 7a and 7b of parallel cords each laid at an angle less than 30 degrees with respect to the equator of the tyre, and the width of the belt is substantially the same width as the tread width.

The belt ply cord is a high modulus fibre cord whose initial modulus of elasticity is about 2500 kgf/sq.mm or more, such as aromatic polyamide, glass or carbon fibre cords, or steel cords, whereby high speed performance is improved.

Incidentally, the carcass and belt can be changed in ply number and cord material according to service requirements.

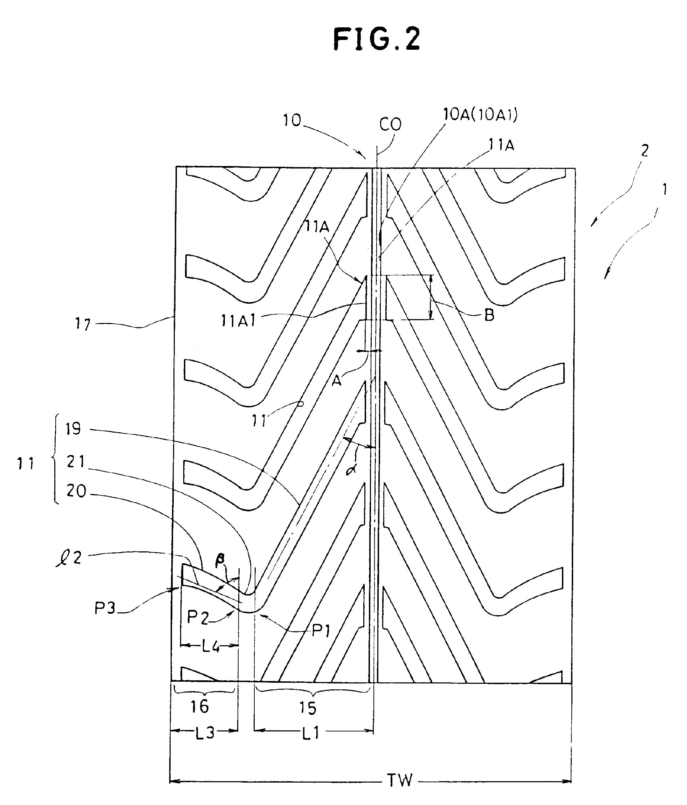

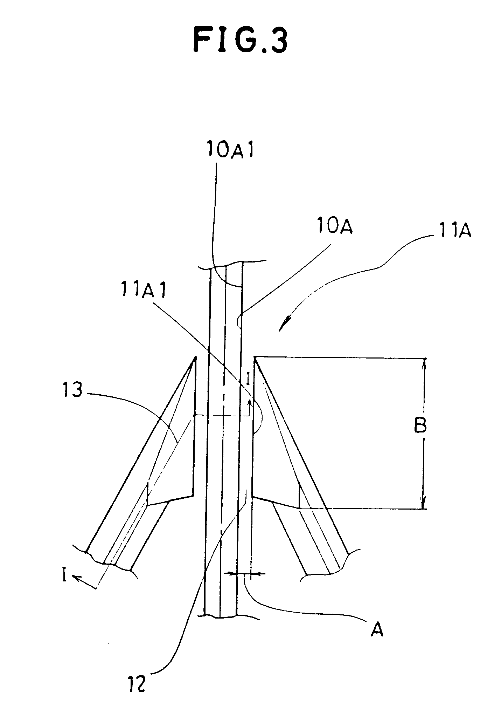

In the present invention, as shown in Figures 2 and 3, the tread portion 2 is provided with a main groove 10 extending circumferentially continuously along the equator of the tyre, and on each side of the main groove 10, a plurality of sub grooves 11 are provided at intervals in the circumferential direction of the tyre.

In this embodiment, the main groove 10 is a straight groove.

The sub grooves 11 are arranged symmetrically of the tyre equator CO, and each sub groove 11 is extended towards the main groove 10 from the tread edge region, and the inner end 11A thereof is terminated near the main groove 10 so as not to connect with the main groove 10.

The sub grooves 11 in this embodiment comprise a main part 19 extending substantially straight and a lateral part 20 extending in a different direction to that of the main part, and the main part 19 and the lateral part 20 are connected to each other by a joint part 21. The sub groove 11 is bent at the joint part 21 by about 90 degrees, therefore, the joint part 21 is a turning point.

The main part 19 is formed within a region 15 defined between the tyre equator CO and a position P1 spaced apart a distance L1 which is 0.15 to 0.3 times the tread width TW from the tyre equator CO. The regions 15 define the ground contacting area in straight running.

The main part 19 is inclined to the tyre equator CO, and the centre line of the main part 19 is laid at an angle alpha ($\alpha$) of 15 to 35 degrees with respect to the tyre equator CO, whereby, in the tread crown portion (the regions 15), the tread rigidity in the circumferential direction is maintained, and resistance to the stress generated when accelerating or braking in straight running is provided, and as a result, straight running stability and wear resistance are improved.

Even if the main part 19 is formed in a curved configuration such as an arc, the angle between an extension of the centre line of the main part and the centre line of the main groove 10 is set in the range of 15 to 35 degrees.

The lateral part 20 is formed within a region 16 defined between the tread edge 17 and a position P2 spaced apart a distance L3 which is not more than 0.15 times the tread width TW from the tread edge. The region 16 contacts with the ground when the tyre is inclined.

The lateral part 20 extends from the position P2 to a position P3 spaced apart axially outwardly of the position P2 a distance L4 which is 0.7 to 1.0 times the above-mentioned distance L3.

The lateral part in this embodiment is slightly curved, and a straight line $\ell 2$ drawn between a groove centre point at the position P2 and that at the position P3, that is, a straight line drawn between the ends of the lateral part, inclines at an angle beta ($\beta$) of 50 to 90 degrees with respect to the tyre equator, so that in the regions 18, the tread rigidity in the axial direction is maintained to increase the resistance to the lateral stress caused by the centrifugal force during turning, and as a result, running stability when turning is improved, and also, uneven wear around the lateral part 20 is restrained.

Preferably, the centre line of the lateral part 20 is formed in an arc having a radius of curvature which is 0.7 to 1.8 times the above-mentioned distance L3, whereby the above-mentioned resistance to the lateral stress can increase gradually in proportion to an increase in the angle of an inclination of tyre by which the lateral stress is increased.

Figures 3-5 show the axially inner end portion of the sub groove 11.

As shown in Figure 3, the inner ends 11A of the sub groove 11 extend in parallel with the side wall of the main groove 10 at the tread surface. In other words, the upper edge 11A1 of the terminal end wall of the sub groove is parallel with the upper edge 10A1 of the side wall 10A of the main groove 10, and the distance A between the edges 10A1 and 11A1 is set to be not more than 3mm, and the length B of the edge 11A1 is set to be more than 5mm, by which the drainage of the water existing between the tread surface and road surface is improved and thereby wet grip performance is increased. Further, in this embodiment, the above-mentioned length B is set larger than the length obtained when the groove width is measured in the longitudinal direction of the main groove, so that the sub groove is flared at the inner end.

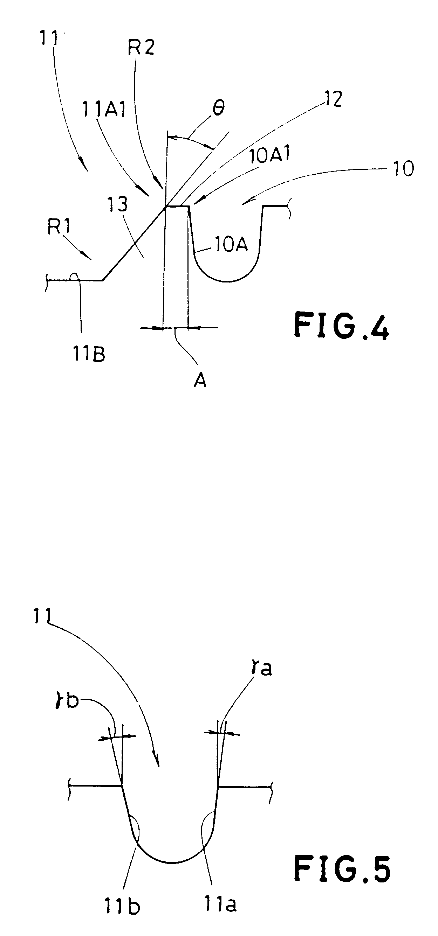

Further, as shown in Figure 4, the end wall of the sub groove 11 is inclined at an angle of 40 to 80 degrees to the normal direction to the tread surface so that the sub groove 11 is provided immediately inside the end 11A with a protrusion 13 projecting from the groove bottom 11B of the sub groove 11 to provide a lateral support for the thin wall 12 between the main groove 10 and the sub groove 11. Also the protrusion 13 provides a support for the groove side walls of the sub groove 11 at the end portion thereof. Accordingly, the rigidity is increased to improve dry grip performance, and wear resistance also is improved.

As shown in Figure 4, the inclined wall of the protrusion 13 facing the interior of the sub groove 11 is substantially plane between the inner end R1 and the outer end R2, and the inner end R1 starts from the groove bottom, and the outer end R2 reaches to the tread surface.

In the longitudinal direction of the sub groove 11, the angle Theta ($\theta$) of the inclined wall should be more than 40 degrees and less than 80 degrees to the normal direction, thereby improving the drainage performance and increasing the rigidity of the above-mentioned portion 12.

When the distance A is over 3mm and/or the length B is less than 5mm the drainage becomes poor. When the inclination angle Theta ($\theta$) is less than 40 degrees, the in-between wall 12 is not satisfactorily reinforced and the dry grip performance becomes low. On the other hand, when the inclination angle Theta ($\theta$) is over 80 degrees, the drainage performance is deteriorated.

Further, as shown in Figure 5, the sidewalls of the sub groove 11 are formed asymmetrically so that the inclination angle $\gamma a$ of the groove sidewall 11a on one side is in the range of 3 to 10 degrees, and the inclination angle $\gamma b$ of the groove sidewall 11b on the other side is in the range of 10 to 20 degrees, whereby the movement of the sidewall is suppressed to prevent uneven wear and at the same time the drainage is improved.

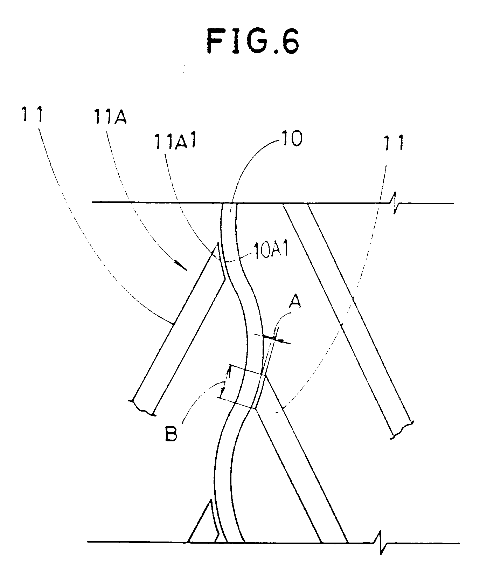

Figure 6 shows a modification of the above-described tread pattern, or another embodiment of the present invention, in which the main groove 10 is formed in a wavy configuration. This makes the inner edge 11A1 of each sub groove 11 to be formed in a curved line parallel with the curved edge 10A1 of the main groove, and further, the sub grooves 11 on one side of the main groove are displaced or shifted from those on the other side by a half pitch.

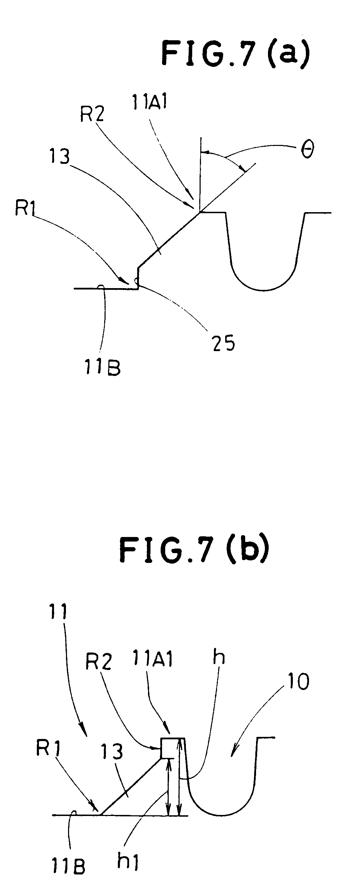

Figures 7(a) and 7(b) are sectional views similar to Figure 4 which show modifications of the protrusion.

In Figure 7(a), the protrusion 13 projects suddenly at the inner end R1 thereof and the height increases gradually towards the outer end R2, so that it has a step or a vertical wall 25 under the inclined wall.

In Figure 7(b), the height of the protrusion 13 increases gradually from the inner end R1 to the outer end R2, but the maximum height h1 at the outer end is smaller than the depth h of the sub groove. In this case, the height h1 should be more than 1/2 times, more preferably more than 2/3 times the depth h.

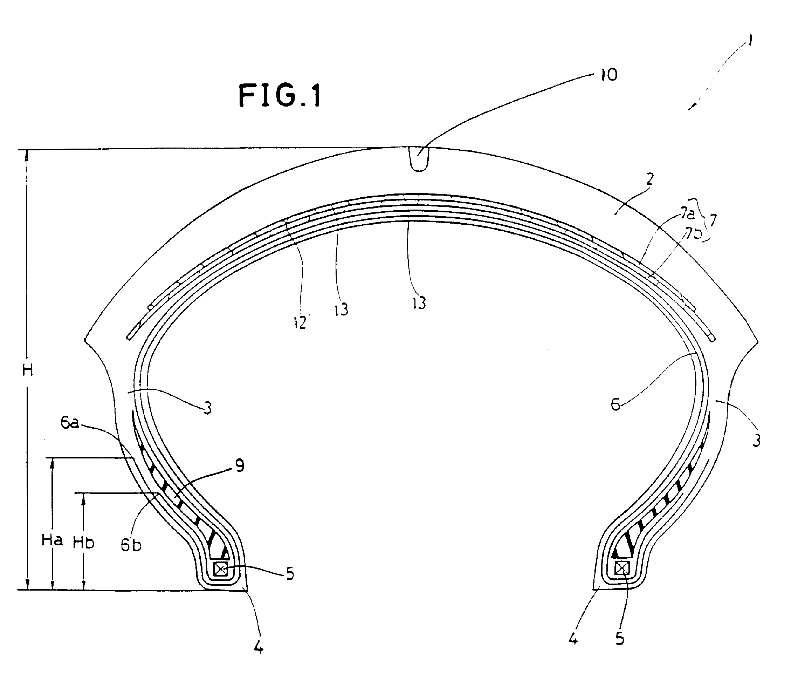

Test tyres including a working example tyre and reference tyres 1 and 2 were made by way of trial. The working example tyre had the structures shown in Figures 1-5 and Table 1, and the reference tyres 1 and 2 had the same structures as the working example with the exception of the construction of the inner end portion of the sub groove, which structure is also shown in Table 1. The tread patterns of the reference tyres are shown in Figures 8(a) and (b).

Dry grip, wet grip, wear resistance, shimmy and high speed stability of each test tyre were evaluated by skilled test rider's feeling. The test results are shown in Table 1 by using an index on the basis that the reference tyre 1 or 2 is 100 wherein the higher value, the better the performance.

TABLE 1

|  | Working Example | Ref.1 | Ref.2 |
|---|---|---|---|
| Tread Pattern | Fig.2 | Fig.8(b) | Fig.8(a) |
| Distance A | 3mm | --- | --- |
| Length B | 5mm | --- | --- |
| Inclination Theta ($\theta$) | 45 deg | --- | --- |
| Dry grip | 110 | 110 | 100 |
| Wet grip | 110 | 100 | 110 |
| Wear resistance | 105 | 110 | 100 |
| Shimmy | 105 | 110 | 100 |
| High speed stability | 100 | 100 | 100 |

As mentioned above, in the motorcycle tyre according to the present invention, the inner edges of the sub grooves are located near and substantially parallel to the main groove so as to provide a long narrow edged bank, therefore the drainage performance is increased to improve wet grip performance. Further, the protrusion provides a support for the narrow bank to as to increase the rigidity of that portion and thereby to improve dry grip performance.

## Claims

1. A motorcycle tyre comprising a tread (2) provided with a main groove (10) extending continuously in the circumferential direction of the tyre, and sub grooves (11) having a terminal end (11A) located near the main groove (10) characterised by the distance (A) between the terminal end (11A) of each sub groove (11) and the main groove (10) being not more than 3mm at the tread surface, each terminal end (11A) having a length (B) not less than 5mm at the tread surface, each of the sub grooves (11) being provided at the terminal end (11A) with a protrusion (13), the height of which from the sub groove bottom (11B) increases toward the upper edge (11A1) of the terminal end (11A) to provide an inclined wall on the protrusion (13) and the inclination angle ($\theta$) of the inclined wall of each protrusion (13) being in the range of 40 to 80 degrees with respect to the direction normal of the tread surface.

## Patentansprüche

1. Motorradreifen mit einer Lauffläche (2), die mit einer sich kontinuierlich in Umfangsrichtung des Reifens erstreckenden Hauptrille (10) und mit Nebenrillen (11) versehen ist, welche ein Abschlußende (11A) aufweisen, das nahe der Hauptrille (10) angeordnet ist, gekennzeichnet durch den Abstand (A) zwischen dem Abschlußende (11A) einer jeden Nebenrille (11) und der Hauptrille (10), der nicht mehr als 3 mm an der Laufflächenoberfläche beträgt, wobei jedes Abschlußende (11A) eine Länge (B) aufweist, die nicht kleiner als 5 mm an der Laufflächenoberfläche ist, jede der Nebenrillen (11) am Abschlußende (11A) mit einem Vorsprung (13) versehen ist, dessen Höhe vom Nebenrillenboden (11B) in Richtung der oberen Kante (11A1) des Abschlußendes (11A) anwächst, um eine geneigte Wand am Vorsprung (13) zu schaffen, und der Neigungswinkel ($\Theta$) der geneigten Wand eines jeden Vorsprungs (13) im Bereich von 40 bis 80° hinsichtlich der Richtung senkrecht zur Laufflächenoberfläche liegt.

## Revendications

1. Pneumatique de motocyclette, comprenant une bande de roulement (2) qui a une gorge principale (10) placée de façon continue dans la direction circonférentielle du pneumatique, et des gorges secondaires (11) ayant une extrémité terminale (11A) placée près de la gorge principale (10), caractérisé en ce que la distance (A) comprise entre l'extrémité terminale (11A) de chaque gorge secondaire (11) et la gorge principale (10) ne dépasse pas 3 mm à la surface de la bande de roulement, chaque extrémité terminale (11A) ayant une longueur (B) qui n'est pas inférieure à 5 mm au niveau de la surface de la bande de roulement, chaque gorge secondaire (11) ayant, à l'extrémité terminale (11A), une saillie (13) dont la hauteur par rapport au fond (11B) de la gorge augmente vers le bord supérieur (11A1) de l'extrémité terminale (11A) pour la formation d'une paroi inclinée sur la saillie (13), et l'angle d'inclinaison ($\theta$) de la paroi inclinée de chaque saillie (13) étant compris entre 40 et 80° par rapport à la direction normale à la surface de la bande de roulement.

# FIG.1

EP 0 368 553 B1

# FIG.2

# FIG.3

FIG.4

FIG.5

# FIG.6

# FIG.7 (a)

# FIG.7 (b)

# FIG.8 (a)

# FIG.8 (b)